# EUROPEAN PATENT APPLICATION

(11) **EP 4 685 734 A1**
(43) Date of publication of application: **28.01.2026**
(21) Application number: 23928735.2
(22) Date of filing: 05.10.2023
(51) Int. Cl.: G06T 7/00, G01N 33/48, G01N 33/53

(54) **AREA SELECTION ASSISTANCE METHOD, AREA SELECTION ASSISTANCE DEVICE, AND PROGRAM**

(30) Priority: 22.03.2023 JP 2023045668
(71) Applicant: SCREEN Holdings Co., Ltd., Kyoto-shi, Kyoto 602-8585 (JP); Kyoto Prefectural Public University Corporation, Kyoto-shi, Kyoto 602-8566 (JP)
(72) Inventor: OGI, Hiroshi, Kyoto-shi, Kyoto 602-8585 (JP); HIRAI, Saya, Kyoto-shi, Kyoto 602-8585 (JP); FURUTA, Tomoyasu, Kyoto-shi, Kyoto 602-8585 (JP); TSUJIKAWA, Takahiro, Kyoto-shi, Kyoto 602-8566 (JP)
(74) Representative: Goddar, Heinz J.
(86) International application number: PCT/JP2023/036444
(87) International publication number: WO 2024/195161

(57) **Abstract**

A region selection assistance method includes a step of segmenting a stained image of a sample obtained by immunostaining into a plurality of segmented regions (step S11), a step of allocating one display color to each of the segmented regions from a display color group of a plurality of colors each having different conspicuity, to make each segmented region more conspicuous as the segmented region shows a higher aggregation of stained cells (step S12), a step of generating a selection assistance image in which each of the segmented regions is filled in with the display color allocated in step S12 (step S13), and a step of displaying the selection assistance image on a screen (step S14). This enables an operator to readily select a region of the stained image that is suitable for analysis as an analysis region.

## Description

### TECHNICAL FIELD

The present invention relates to a technique for assisting selection of an analysis region of a stained image obtained by immunostaining.

### CROSS-REFERENCE TO RELATED APPLICATIONS

This application claims priority benefit of Japanese Patent Application No. JP2023-045668 filed in the Japan Patent Office on March 22, 2023, the entire disclosure of which is incorporated herein by reference.

### BACKGROUND ART

In recent year's research in medical or biological sciences, tissue-derived samples such as tissue samples or cell samples are analyzed in units of single cells for the purpose of, for example, elucidation of mechanisms such as disease mechanisms, biological mechanisms, or drug action mechanisms. In immunostaining analysis, for example, quantitative and/or qualitative analysis is performed by staining tissue-derived substances such as proteins and measuring the conditions of staining of these substances.

International Publication No. WO/2015/190225 (Document 1) proposes a technique for segmenting a sample image of one cell into a plurality of sections and scoring the malignancy of a disease such as a cancer on the basis of the expression level and distribution of biomarkers in each section. Japanese Patent Application Laid-Open No. 2017-153852 (Document 2) proposes a technique for identifying pixels that indicate bloodstream characteristics in a diagnostic image, the bloodstream characteristics being obtained by measuring successive changes of contrast media inside lesions in a dynamic check conducted during a test such as CT or MRI.

In the analysis of a tissue sample, analyzing the entire sample in units of single cells will take an enormous amount of time for analysis. It is thus conceivable to extract a part of the sample, namely a partial region, from the sample and analyze the partial region. In order to extract the partial region, it is necessary to appropriately select a region that expresses features of the sample well and suits for analysis (i.e., a region that appropriately includes various types of cells to be analyzed).

However, in the case where the image of a tissue sample includes only a small number of cells that have been stained (hereinafter, also referred to as "stained cells"), even if the operator visually checks the image as-is, it may be difficult to visually recognize the stained cells with a magnification of display that the entire tissue is displayed. Moreover, noise other than the stained cells (e.g., white or dark black pixels resulting from the tissue or cell structure) may lower visibility of the stained cells. Therefore, it is not easy for the operator who visually checks the image of the tissue sample as-is to select a region suitable for analysis from the image.

### SUMMARY OF THE INVENTION

The present invention is intended for a region selection assistance method of assisting selection of an analysis region of a stained image obtained by immunostaining, and it is an object of the present invention to readily select a region of a stained image that is suitable for analysis.

Aspect 1 of the present invention is a region selection assistance method of assisting selection of an analysis region of a stained image obtained by immunostaining. The region selection assistance method includes a) segmenting a stained image of a sample obtained by immunostaining into a plurality of segmented regions, b) allocating one display color to each of the plurality of segmented regions from a display color group of a plurality of colors each having different conspicuity, to make each segmented region more conspicuous as the segmented region shows a higher aggregation of stained cells, c) generating a selection assistance image in which each of the plurality of segmented regions is filled in with the display color allocated in the operation b), and d) displaying the selection assistance image on a screen.

According to the present invention, it is possible to readily select a region of the stained image that is suitable for analysis.

Aspect 2 of the present invention is the region selection assistance method according to Aspect 1, in which in the operation b), the aggregation of stained cells in the segmented region is calculated based on a staining intensity of the segmented region.

Aspect 3 of the present invention is the region selection assistance method according to Aspect 2, in which the calculation of the aggregation of stained cells in the segmented region includes e) obtaining a staining intensity of each of a plurality of subregions that are arranged in a matrix configuring the segmented region, and f) downscaling an image by using a maximum value of the staining intensities of the subregions as a representative value for the staining intensity of the segmented region.

Aspect 4 of the present invention is the region selection assistance method according to Aspect 1, in which in the operation b), the aggregation of stained cells in the segmented region is calculated based on the number of positive cells included in the segmented region.

Aspect 5 of the present invention is the region selection assistance method according to any one of Aspects 1 to 4, in which in the operation d), the stained image or another selection assistance image is displayed aligned with the selection assistance image on the screen, the another selection assistance image being generated from another stained image of the sample obtained by immunostaining, by using a method similar to a method used to generate the selection assistance image.

Aspect 6 of the present invention is the region selection assistance method according to Aspect 5, in which a magnification of display of the selection assistance image and a magnification of display of either the stained image or the another selection assistance image are changeable in conjunction with each other.

Aspect 7 of the present invention is the region selection assistance method according to Aspect 5 (or according to Aspect 5 or 6), in which a display range of the sample in the selection assistance image and a display range of the sample in either the stained image or the another selection assistance image are changeable in conjunction with each other.

Aspect 8 of the present invention is the region selection assistance method according to Aspect 5 (or according to any one of Aspects 5 to 7), in which a position indicator that is displayed over the selection assistance image and indicates a position in the selection assistance image and a position indicator that is displayed over either the stained image or the another selection assistance image and indicates a position in either the stained image or the another selection assistance image are movable in conjunction with each other.

Aspect 9 of the present invention is the region selection assistance method according to Aspect 5 (or according to any one of Aspects 5 to 8), in which in the operation d), a scale of the sample in the selection assistance image is the same as a scale of the sample in either the stained image or the another selection assistance image.

Aspect 10 of the present invention is the region selection assistance method according to any one of Aspects 1 to 4 (or according to any one of Aspects 1 to 9) that further includes g) before the operation b), segmenting another stained image of the sample obtained by immunostaining into a plurality of segmented regions in a manner similar to a manner of segmentation in the operation a). The allocation of the display color in the operation b) is performed based on the aggregation of stained cells in each segmented region of both the stained image and the another stained image.

Aspect 11 of the present invention is the region selection assistance method according to any one of Aspects 1 to 4 (or according to any one of Aspects 1 to 10), in which a binary image that indicates a positive region and a negative region is generated by subjecting another stained image of the sample obtained by immunostaining to threshold value processing, and in the operation d), the selection assistance image is masked with the positive region or the negative region.

Aspect 12 of the present invention is the region selection assistance method according to any one of Aspects 1 to 4 (or according to any one of Aspects 1 to 11), in which a boundary line of a positive region or a negative region is acquired by subjecting another stained image of the sample obtained by immunostaining to threshold value processing, and in the operation d), the boundary line is displayed over the selection assistance image.

Aspect 13 of the present invention is a region selection assistance device that assists selection of an analysis region of a stained image obtained by immunostaining. The region selection assistance device includes an image segmentor that segments a stained image of a sample obtained by immunostaining into a plurality of segmented regions, a display color allocator that allocates one display color to each of the plurality of segmented regions from a display color group of a plurality of colors each having different conspicuity, to make each segmented region more conspicuous as the segmented region shows a higher aggregation of stained cells, a selection-assistance-image generator that generates a selection assistance image in which each of the plurality of segmented regions is filled in with the display color allocated by the display color allocator, and a screen that displays the selection assistance image.

Aspect 14 of the present invention is a program for assisting selection of an analysis region of a stained image obtained by immunostaining. The program is executed by a computer to a) segment a stained image of a sample obtained by immunostaining into a plurality of segmented regions, b) allocate one display color to each of the plurality of segmented regions from a display color group of a plurality of colors each having different conspicuity, to make each segmented region more conspicuous as the segmented region shows a higher aggregation of stained cells, c) generate a selection assistance image in which each of the plurality of segmented regions is filled in with the display color allocated in the operation b), and d) display the selection assistance image on a screen.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a diagram showing a configuration of an image display device according to one embodiment.
Fig. 2 is a block diagram showing a functional configuration of the image display device.
Fig. 3 is a diagram showing a stained image.
Fig. 4 is a diagram showing a selection assistance image.
Fig. 5 is a flowchart showing a procedure for displaying the selection assistance image.
Fig. 6 is a flowchart showing part of the procedure for displaying the selection assistance image.
Fig. 7 is a flowchart showing part of the procedure for displaying the selection assistance image.
Fig. 8 is a diagram showing one example of display on a screen.
Fig. 9 is a diagram showing one example of display on the screen.
Fig. 10 is a diagram showing one example of display on the screen.
Fig. 11 is a diagram showing one example of display on the screen.
Fig. 12 is a diagram showing one example of display on the screen.
Fig. 13 is a diagram showing one example of display on the screen.
Fig. 14 is a diagram showing one example of display on the screen.
Fig. 15 is a diagram showing one example of display on the screen.
Fig. 16 is a diagram showing one example of display on the screen.
Fig. 17 is a diagram showing one example of display on the screen.
Fig. 18 is a diagram showing one example of display on the screen.
Fig. 19 is a diagram showing one example of display on the screen.
Fig. 20 is a flowchart showing part of a procedure for displaying the selection assistance image.

### DESCRIPTION OF EMBODIMENTS

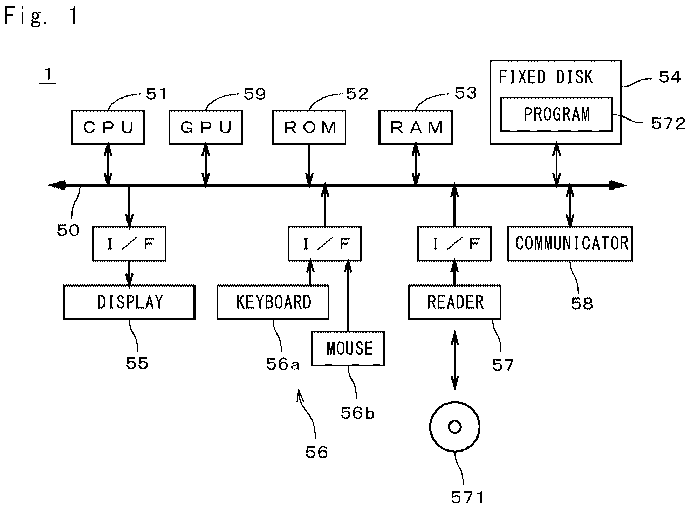

Fig. 1 is a diagram showing a configuration of a computer that functions as a region selection assistance device 1 according to one embodiment of the present invention. The region selection assistance device 1 is used to assist selection of a region suitable for analysis from a stained image of a tissue-derived sample obtained by immunostaining.

Fig. 1 is a diagram showing the configuration of the computer functioning as the region selection assistance device 1. This computer has a configuration of a general computer system that includes a CPU 51, ROM 52, RAM 53, a fixed disk 54, a display 55, an input unit 56, a reader 57, a communicator 58, a GPU 59, and a bus 50. The CPU 51 performs a variety of arithmetic processing. The GPU 59 performs a variety of arithmetic processing related to image processing. The ROM 52 stores basic programs. The RAM 53 stores various types of information. The fixed disk 54 stores information. The display 55 is a display device that displays various types of information such as images.

The input unit 56 includes a keyboard 56a and a mouse 56b that accept input from an operator. The reader 57 reads information from a computer-readable recording medium 571 such as an optical disk, a magnetic disk, a magneto-optical disk, or a memory card. The display 55, the keyboard 56a, the mouse 56b, and the reader 57 are connected to the bus 50 via interfaces I/F. The communicator 58 transmits and receives signals to and from external devices located outside the region selection assistance device 1. The bus 50 serves as a signal circuit that connects the CPU 51, the GPU 59, the ROM 52, the RAM 53, the fixed disk 54, the display 55, the input unit 56, the reader 57, and the communicator 58.

In the region selection assistance device 1, a program 572 is read out from the recording medium 571 via the reader 57 and stored in the fixed disk 54 in advance. Alternatively, the program 572 may be stored in the fixed disk 54 via a network . The CPU 51 and the GPU 59 perform arithmetic processing by using the RAM 53 and the fixed disk 54 in accordance with the program 572. The CPU 51 and the GPU 59 function as an arithmetic unit in the region selection assistance device 1. Any other configuration that functions as an arithmetic unit may also be employed in addition to the CPU 51 and the GPU 59.

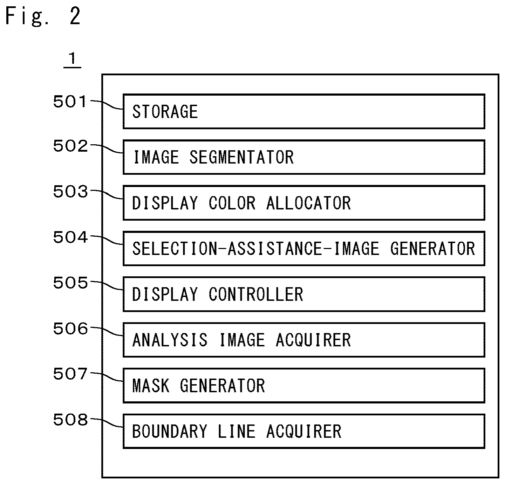

Fig. 2 is a block diagram showing a functional configuration of the region selection assistance device 1 realized by the aforementioned computer executing arithmetic processing or the like in accordance with the program 572. This functional configuration includes a storage 501, an image segmentor 502, a display color allocator 503, a selection-assistance-image generator 504, a display controller 505, an analysis image acquirer 506, a mask generator 507, and a boundary line acquirer 508. All or some of these functions may be realized by dedicated electric circuits. Alternatively, these functions may be realized by a plurality of computers.

In the functional configuration shown in Fig. 2, the storage 501 is mainly realized by the RAM 53 and the fixed disk 54. The image segmentor 502, the display color allocator 503, the selection-assistance-image generator 504, the display controller 505, the analysis image acquirer 506, the mask generator 507, and the boundary line acquirer 508 are realized by the CPU 51, the GPU 59, the ROM 52, the RAM 53, the fixed disk 54, and peripheral configurations thereof.

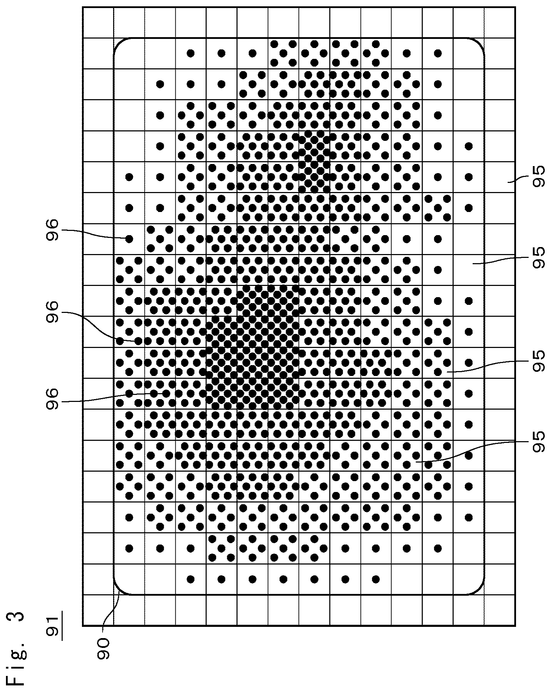

The storage 501 stores stained images of tissue samples (hereinafter, also simply referred to as "samples") in advance. Fig. 3 is a diagram showing one example of a stained image 91 of a sample 90 stored in the storage 501. The stained image 91 is a captured image obtained by capturing an image of the sample 90 stained by immunostaining. For example, the stained image 91 may be a monochromatic stained image obtained by staining the sample 90 by one staining method and capturing an image of the sample 90. The staining method may, for example, be the one using a CD45 antibody that detects a CD45 protein which is one protein classified by the CD classification system. In this case, among a large number of cells 96 included in the sample 90 in the stained image 91, those that are detected by the CD45 antibody are stained and indicated in monochrome. Note that the staining of the sample 90 may be performed by any of various staining methods that use antibodies, or may be performed by any of various staining methods that do not use antibodies.

The storage 501 shown in Fig. 2 also stores in advance a display color group that is used with a selection assistance image which will be described later. The display color group includes a plurality of colors (i.e., display colors) each having different conspicuity. The "conspicuity" as used herein refers to how much the color attracts attention of an operator or the like who visually checks an image. For example, warm colors have higher conspicuity than cool colors, and conspicuity becomes higher as brightness increases. The aforementioned "plurality of colors" include not only colors that are the same in color but have different densities (i.e., monochrome), but also a plurality of types of colors that have different hues. For example, the display color group may include "yellow," "green," "light blue," and "blue" as the display colors in descending order of conspicuity. In the present embodiment, since the stained image 91 is a monochrome stained image (i.e., an image displayed in monochrome) as described above, the display color group of a plurality of colors shows higher discrimination than the color group configuring the stained image 91 (i.e., monochrome).

The image segmentor 502 segments the stained image 91 into a plurality of segmented regions 95. In the example shown in Fig. 3, the stained image 91 is segmented into the segmented regions 95 that are arranged in a matrix in the vertical and horizontal directions of the drawing. Each segmented region 95 may have, for example, a square shape. For example, each segmented region 95 may be larger than each pixel configuring the stained image 91. In other words, each segmented region 95 includes a plurality of pixels. Each segmented region 95 may, for example, be larger than each cell 96 included in the stained image 91. Note that the shape of each segmented region 95 may be any of various shapes (e.g., a rectangle) other than a square. In the stained image 91, the segmented regions 95 do not necessarily have to be generated in the region other than the sample 90. Since the actual stained image 91 does not include lines that indicate the boundaries of the segmented regions 95, such boundaries are not displayed when the stained image 91 is displayed on the display 55 (see Fig. 1).

The display color allocator 503 calculates the aggregation of cells 96 that have been stained in each of the segmented regions 95 (these cells are hereinafter also referred to as "stained cells 96"). The display color allocator 503 allocates one display color to each segmented region 95 from the aforementioned display color group in accordance with the aggregation of stained cells 96 in the segmented region 95. The display color allocated to each segmented region 95 becomes more conspicuous as the segmented region 95 shows a higher aggregation of stained cells 96. Note that the display color allocator 503 allocates a background color of "black" to the region other than the sample 90.

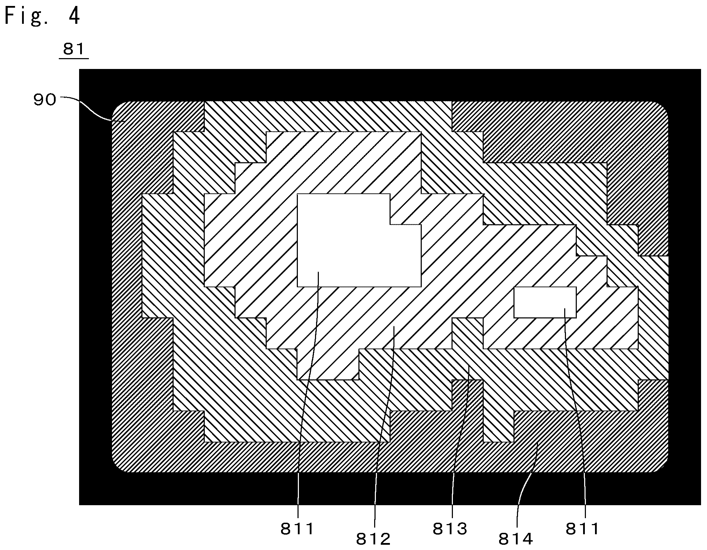

The selection-assistance-image generator 504 generates a selection assistance image corresponding to the stained image 91. Fig. 4 is a diagram showing one example of a selection assistance image 81. The selection assistance image 81 is an image in which each segmented region 95 of the stained image 91 is filled in with one display color allocated by the display color allocator 503.

For example, segmented regions 95 that are included in a range that shows the highest aggregation of stained cells 96 (see Fig. 3) are filled in with "yellow" and configure a first region 811 in the selection assistance image 81. In Fig. 4, for convenience in illustration, two first regions 811 are indicated as white regions without cross-hatching. Segmented regions 95 that are included in a range that shows the second highest aggregation of stained cells 96 are filled in with "green" and configure a second region 812 in the selection assistance image 81. In Fig. 4, the second region 812 is cross-hatched with parallel diagonal lines at relatively large intervals. Segmented regions 95 that are included in a range that shows the third highest aggregation of stained cells 96 are filled in with "light blue" and configure a third region 813 in the selection assistance image 81. In Fig. 4, the third region 813 is cross-hatched with parallel diagonal lines at relatively smaller intervals than those in the second region 812. Segmented regions 95 that are included in a range that shows the lowest aggregation of stained cells 96 are filled in with "blue" and configure a fourth region 814 in the selection assistance image 81. In Fig. 4, the fourth region 814 is cross-hatched with parallel diagonal lines at small intervals. In the example shown in Fig. 4, the intervals of the parallel diagonal lines become smaller as the display color has lower conspicuity.

The display controller 505 shown in Fig. 2 causes the aforementioned selection assistance image 81 to be displayed on the screen of the display 55 (see Fig. 1). The display controller 505 is also capable of changing the magnification of display of the selection assistance image 81 displayed on the screen. The display controller 505 is also capable of changing the display range of the sample 90 in the selection assistance image 81.

The analysis image acquirer 506 cuts out a region of the stained image 91 that is set by using the selection assistance image 81 displayed on the display 55, as an image for detailed analysis, from the stained image 91 and stores the cut-out region in the storage 501.

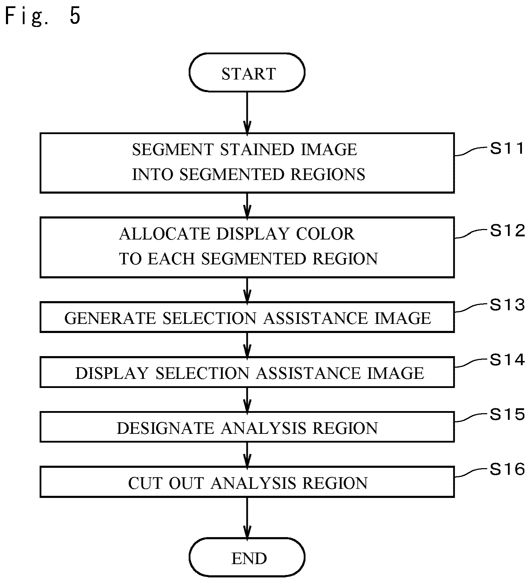

Next, a procedure for displaying the selection assistance image 81, performed by the region selection assistance device 1, will be described with reference to Figs. 5 to 7. Firstly, the image segmentor 502 (see Fig. 2) segments the stained image 91 into a plurality of segmented regions 95 as shown in Fig. 3 (step S11). Then, the display color allocator 503 (see Fig. 2) calculates the aggregation of stained cells 96 in each of the segmented regions 95. Then, one display color is allocated to each segmented region 95 so as to make each segmented region 95 more conspicuous as the segmented region 95 shows a higher aggregation of stained cells 96 (step S12).

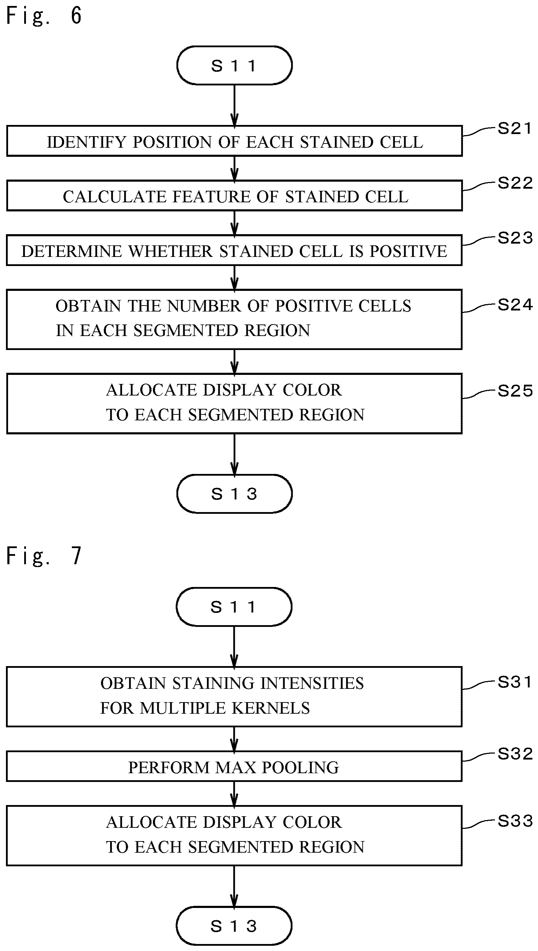

In step S12, the aggregation of stained cells 96 in each segmented region 95 may be calculated by any of various methods. For example, the aggregation of stained cells 96 in each segmented region 95 may be obtained based on the number of positive cells included in the segmented region 95. Specifically, firstly, the position of each stained cell 96 is identified in the stained image 91 (step S21 in Fig. 6). To identify the position of each stained cell 96, known technology such as image segmentation using deep learning may be used. Then, features related to a predetermined analytical technique (e.g., average luminance or the like within cell regions) are calculated for each identified stained cell 96 (step S22).

Next, whether each stained cell 96 is positive or not is determined by comparing the above-described features of the stained cell 96 with a predetermined threshold value (step S23). Then, the number of stained cells 96 determined as positive (i.e., positive cells) is obtained for each segmented region 95 (step S24). In this way, the number of positive cells that conforms to the aforementioned analytical technique is obtained. Thereafter, one display color is allocated to each segmented region 95 from the aforementioned display color group so as to make each segmented region 95 more conspicuous as the segmented region 95 includes a larger number of positive cells (i.e., shows a higher aggregation of positive cells) (step S25).

Alternatively, the aggregation of stained cells 96 in each segmented region 95 may be obtained based on the staining intensity of the segmented region 95. In the case where the segmented region 95 includes a plurality of stained cells 96, an average value of the staining intensity of the segmented region 95 depends on the density of the stained cells 96 in the segmented region 95. Therefore, the higher the staining intensity of the segmented region 95 is, the higher is the aggregation of the stained cells 96, and the lower the staining intensity of the segmented region 95 is, the lower is the aggregation of the stained cells 96.

Fig. 7 is a diagram showing an example of calculating the aggregation of stained cells 96 based on the staining intensity. In the example shown in Fig. 7, firstly, after noise removal processing (e.g., blurring) is performed on the stained image 91, color separation processing is performed to extract one color that corresponds to the staining of the stained cells 96. Then, each segmented region 95 is segmented into a plurality of subregions (e.g., 2×2 (i.e., four) subregions) arranged in a matrix, and the staining intensity of each subregion (so-called kernel) is obtained for the extracted one color (step S31). Then, max pooling is performed to downscale an image by using a maximum value of the staining intensities of the aforementioned subregions (i.e., the highest staining intensity) as a representative value for the staining intensity of the segmented region 95 (step S32). Thereafter, one display color is allocated to each segmented region 95 from the aforementioned display color group so as to make each segmented region 95 more conspicuous as the segmented region 95 has a higher staining intensity (i.e., shows a higher aggregation) (step S33).

With the method shown in steps S31 to S33, there is no need to identify individual stained cells 96 in the stained image 91. Thus, as compared with the method shown in steps S21 to S25, it is possible to reduce throughput required for the allocation of the display color to each segmented region 95 and enable processing using the stained image 91 which is acquired with a low magnification of display. For example, with the method shown in steps S31 to S33, even if the stained image 91 used has such a resolution that the size of one pixel is roughly the same as the size of one cell (e.g., the pixel pitch is 10 µm), it is possible to favorably allocate the display color and improve the conspicuity of a region that shows a high aggregation of stained cells (i.e., a region suitable for analysis). With the method shown in steps S31 to S33, it is also possible to favorably allocate the display color even if the stained image 91 includes only a small number of stained cells 96.

After step S12 ends, the selection-assistance-image generator 504 (see Fig. 2) generates the selection assistance image 81 (see Fig. 4) in which each of the segmented regions 95 is filled in with the display color allocated in step S12 (step S13). Then, the display controller 505 (see Fig. 2) displays the selection assistance image 81 on the screen of the display 55 (step S14).

The region selection assistance device 1 is capable of changing the magnification of display of the selection assistance image 81 and the display range of the sample 90 in the selection assistance image 81 (i.e., the range of the sample 90 that is displayed as the selection assistance image 81 on the screen) on the display 55. The operator designates a region for analysis (hereinafter, also referred to as an "analysis region") in the selection assistance image 81 while variously changing the display mode of the selection assistance image 81 as necessary (step S15). The analysis image acquirer 506 cuts out a region of the stained image 91 that corresponds to the analysis region and transmits the cut-out region as an image for detailed analysis to the storage 501 (step S16).

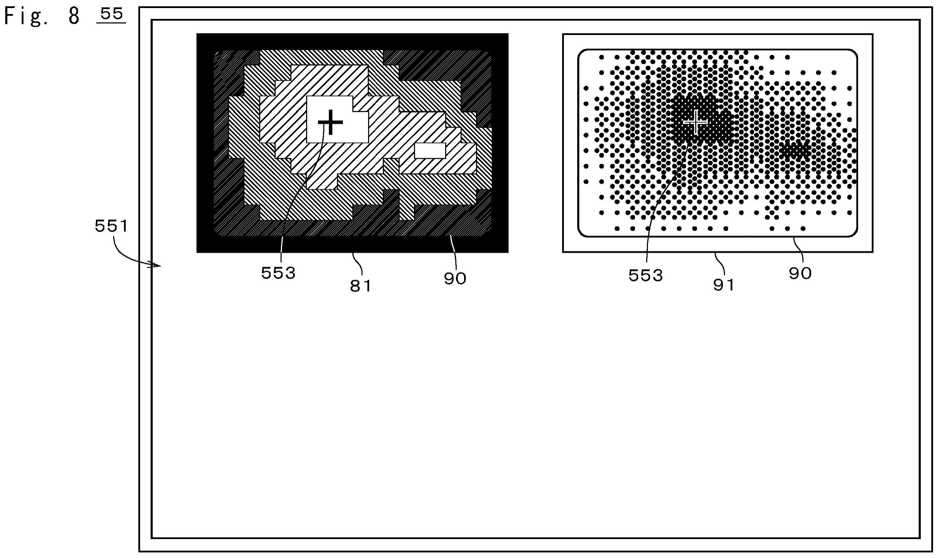

The display controller 505 is also capable of displaying only the selection assistance image 81 on the screen of the display 55, and is also capable of displaying other various images together with the selection assistance image 81 on the screen of the display 55. For example, in step S14, the selection assistance image 81 and the stained image 91 may be displayed aligned with each other without overlap on the screen 551 of the display 55 as shown in Fig. 8. In the example shown in Fig. 8, the selection assistance image 81 and the stained image 91 are displayed aligned with each other on the same scale. That is, the selection assistance image 81 and the stained image 91 are corrected as necessary for display so that the size and position of the sample 90 in the selection assistance image 81 become approximately the same as the size and position of the sample 90 in the stained image 91. This enables the operator to readily compare the selection assistance image 81 and the stained image 91.

In the region selection assistance device 1, it is preferable that the magnification of display of the selection assistance image 81 and the magnification of display of the stained image 91 on the screen 551 may be changeable in conjunction with each other. It is also preferable that the display range of the sample 90 in the selection assistance image 81 and the display range of the sample 90 in the stained image 91 (i.e., the range of the sample 90 that is displayed as the stained image 91 on the screen 551) may be changeable in conjunction with each other.

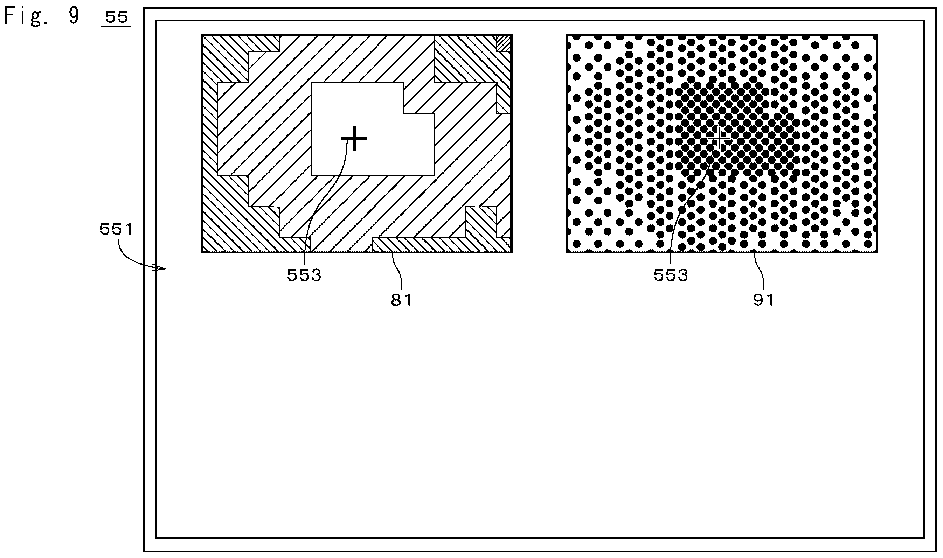

For example, when the operator places a mouse pointer (not shown) over the selection assistance image 81 and changes the magnification of display of the selection assistance image 81 by operating the mouse wheel or the like, the magnification of display of the stained image 91 on the screen 551 is also changed in conjunction therewith and become the same as the magnification of display of the selection assistance image 81 as shown in Fig. 9. If the magnification of display of the selection assistance image 81 is made higher than the initial state, only parts of the selection assistance image 81 and the stained image 91 are displayed on the screen 551. In the same manner, when the operator changes the magnification of display of the stained image 91, the magnification of display of the selection assistance image 81 is also changed in conjunction therewith.

This enables the operator to compare the selection assistance image 81 and the stained image 91 with the same magnification of display without the need to adjust the magnification of display individually in each of the selection assistance image 81 and the stained image 91.

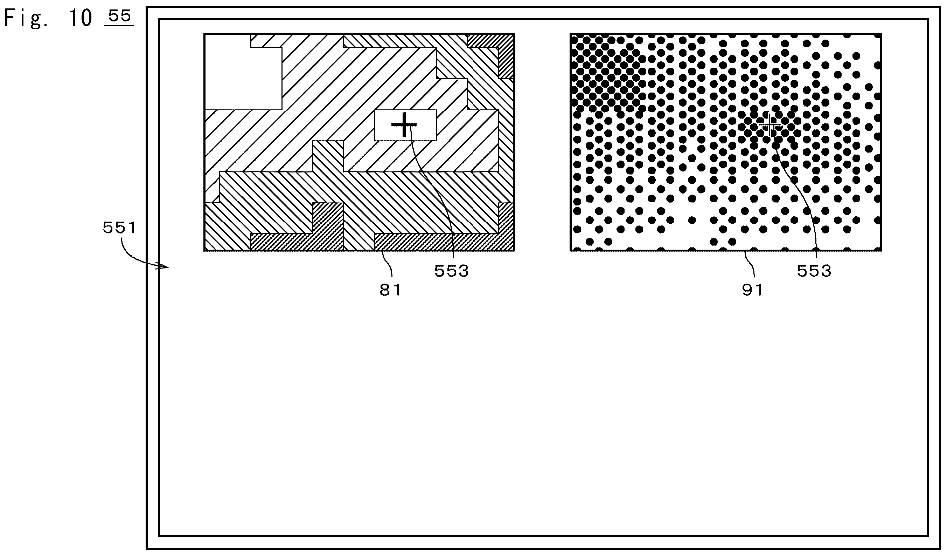

When the selection assistance image 81 and the stained image 91 are made larger than the initial state (see Fig. 8) as shown in Fig. 9, the operator places the mouse pointer over the selection assistance image 81 and operates the mouse button or the like so as to change the display range of the sample 90 (see Fig. 8) in the selection assistance image 81 (i.e., to change the position of the sample 90 in the display range of the selection assistance image 81). Along with this, the display range of the sample 90 in the stained image 91 on the screen 551 is also changed in conjunction therewith and becomes the same as the display range of the selection assistance image 81 as shown in Fig. 10. In the same manner, when the operator changes the display range of the sample 90 in the stained image 91, the display range of the sample 90 in the selection assistance image 81 is also changed in conjunction therewith.

This enables the operator to immediately observe a region of interest that has been focused on in one of the selection assistance image 81 and the stained image 91, without the need to again search for this region of interest in the other image.

In the region selection assistance device 1, as shown in Figs. 8 to 10, a position indicator 553 that indicates a position in the image may be displayed over each of the selection assistance image 81 and the stained image 91. For example, the position indicators 553 may be cross marks or rectangular frames that can be displaced using the mouse 56b or the like. It is preferable that the two position indicators 553 displayed over the selection assistance image 81 and the stained image 91 respectively may be movable in conjunction with each other along with the movement of the mouse 56b or the like. This enables the operator to readily focus on approximately the same positions indicated by the position indicators 553 in the selection assistance image 81 and the stained image 91.

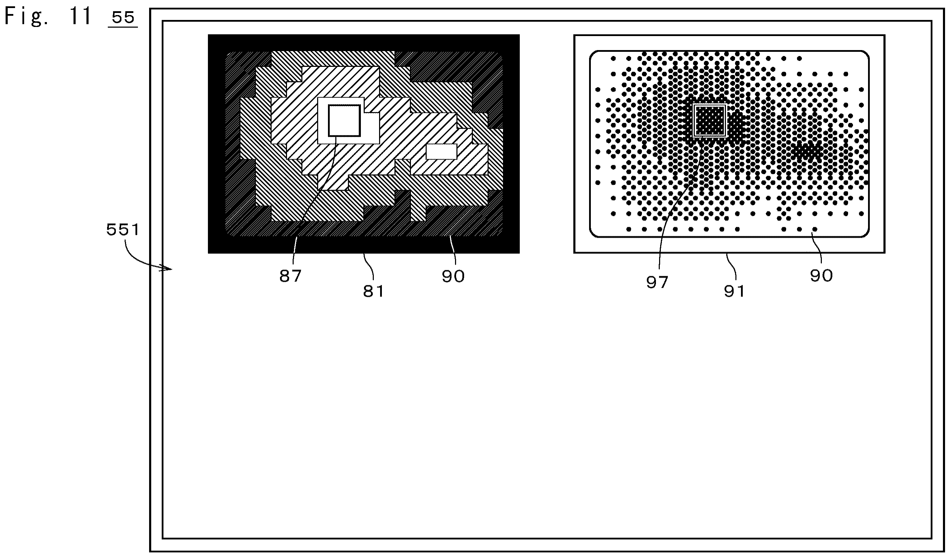

The operator designates an analysis region of the selection assistance image 81 while variously changing the display mode of the selection assistance image 81 and the stained image 91 as necessary. Specifically, the operator sets an analytical window 87 illustrated in Fig. 11 at a desired position in the selection assistance image 81 by using the mouse 56b or the like. In the region selection assistance device 1, an analytical window 97 is also displayed in the stained image 91 in conjunction with the setting of the analytical window 87 in the selection assistance image 81. The size of the analytical window 97 and the position of the analytical window 97 relative to the position of the sample 90 in the stained image 91 are approximately the same as the size of the analytical window 87 and the position of the analytical window 87 relative to the position of the sample 90 in the selection assistance image 81. In the example shown in Fig. 11, the analytical window 87 has a rectangular shape and a varying size. When the size or position of the analytical window 87 is changed, the size or position of the analytical window 97 is also changed in conjunction therewith.

After the setting of the analytical windows 87 and 97 (i.e., the designation of the analysis region) ends, the analysis image acquirer 506 (see Fig. 2) cuts out a region included in the analytical window 97 shown in the stained image 91 and transmits the cut-out region as an image for detailed analysis to the storage 501. This enables the operator to readily check the distribution of aggregates of the stained cells 96 in the selection assistance image 81 and select a region of the stained image 91 that is suitable for analysis on the basis of this distribution. For example, the operator can check a region of the selection assistance image 81 that shows a high aggregation of stained cells 96 and select a region suitable for analysis from a region of the stained image 91 that corresponds to the checked region.

Instead of setting the analytical window 87 by operation on the selection assistance image 81, the operator may set the analytical window 97 directly in the stained image 91. In this case, the analytical window 87 associated with the analytical window 97 may be displayed over the selection assistance image 81. The setting of the analytical windows 87 and 97 may also be performed on the screen 551 in which the magnifications of display of the selection assistance image 81 and the stained image 91 or the display ranges thereof are changed from the initial state as shown in Figs. 9 and 10.

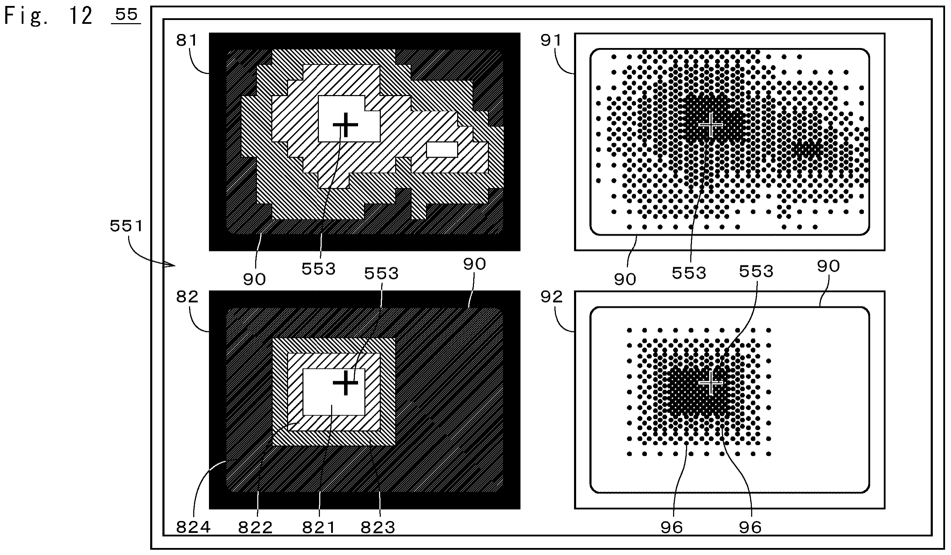

In step S14, as shown in Fig. 12, another stained image 92 that is different from the stained image 91 and another selection assistance image 82 that is generated from the other stained image 92 by using a method similar to the method used to generate the selection assistance image 81 may also be displayed aligned with the stained image 91 and the selection assistance image 81 without overlap on the screen 551.

The stained image 92 is a monochromatic stained image obtained by staining the same sample 90 used to generate the stained image 91 by a staining method different from the staining method used for the stained image 91 (e.g., an immunostaining method using a CD20 antibody). For example, the stained images 91 and 92 may be acquired by sequentially subjecting one sample 90 to staining and image capture using a first antibody, decoloring of the sample 90, and staining and image capture using a second antibody. Alternatively, a plurality of types of monochromatic stained images may be acquired by performing staining using a plurality of types of antibodies collectively on one sample 90 and subjecting a multicolor image obtained by image capture to color separation for each color corresponding to each antibody.

In the selection assistance image 82, as in the selection assistance image 81, segmented regions that are included in a range that shows the highest aggregation of stained cells 96 are filled in with "yellow" and configure a first region 821 in the selection assistance image 82. In Fig. 12, for convenience in illustration, the first region 821 is indicated as a white region without cross-hatching. Segmented regions that are included in a range that shows the second highest aggregation of stained cells 96 are filled in with "green" and configure a second region 822 in the selection assistance image 82. In Fig. 12, the second region 822 is cross-hatched with parallel diagonal lines at relatively large intervals. Segmented regions that are included in a range that shows the third highest aggregation of stained cells 96 are filled in with "light blue" and configure a third region 823 in the selection assistance image 82. In Fig. 12, the third region 823 is cross-hatched with parallel diagonal lines at smaller intervals than those of the second region 822. Segmented regions that are included in a range that shows the lowest aggregation of stained cells 96 are filled in with "blue" and configure a fourth region 824 in the selection assistance image 82. In Fig. 12, the fourth region 824 is cross-hatched with parallel diagonal lines at the smallest intervals. In the example shown in Fig. 12, the intervals of the parallel diagonal lines become smaller as the display color has lower conspicuity.

In the example shown in Fig. 12, the selection assistance image 81, the stained image 91, the selection assistance image 82, and the stained image 92 are displayed aligned with one another and showing the sample 90 on the same scale. That is, the selection assistance images 81 and 82 and the stained images 91 and 92 are corrected as necessary for display so that the size and position of the sample 90 in the selection assistance image 81, the size and position of the sample 90 in the stained image 91, the size and position of the sample 90 in the selection assistance image 82, and the size and position of the sample 90 in the stained image 92 become approximately the same. This enables the operator to readily compare the selection assistance images 81 and 82 and the stained images 91 and 92.

For example, the alignment of the selection assistance images 81 and 82 and the stained images 91 and 92 may be performed automatically by using a known image registration technique, or may be performed manually by the operator. In the manual alignment, firstly, the operator sets a reference point in each of the selection assistance images 81 and 82 and the stained images 91 and 92 by operating the mouse 56b (see Fig. 1) or the like. These reference points are set to points that are assumed to be the same position on the sample 90 in the selection assistance images 81 and 82 and the stained images 91 and 92. Then, the display range in each of the selection assistance images 81 and 82 and the stained images 91 and 92 is adjusted so that the reference point is located at a predetermined position (e.g., the center in each image).

In the region selection assistance device 1, it is preferable that the magnifications of display of the selection assistance image 81 and the stained image 91 and the magnifications of display of the selection assistance image 82 and the stained image 92 on the screen 551 may be changeable in conjunction with one another. It is also preferable that the display ranges of the sample 90 in the selection assistance image 81 and the stained image 91 and the display ranges of the sample 90 in the selection assistance images 82 and the stained image 92 (i.e., the ranges of the sample 90 that are displayed as the selection assistance image 82 and the stained image 92 on the screen 551) may be changeable in conjunction with one another.

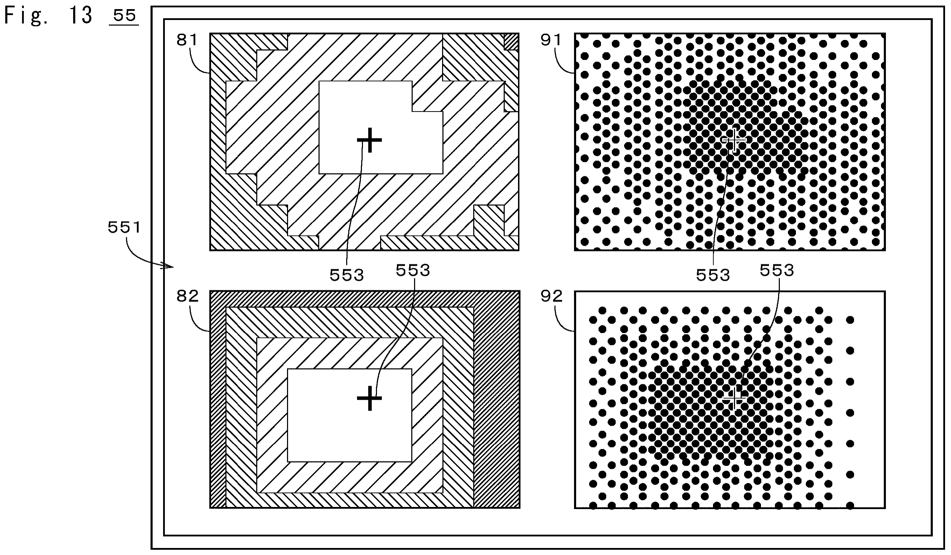

For example, when the operator changes the magnification of display of the selection assistance image 81 by placing the mouse pointer (not shown) over the selection assistance image 81 and operating the mouse wheel or the like, the magnifications of display of the selection assistance image 82 and the stained images 91 and 92 on the screen 551 are also changed in conjunction therewith and become the same as the magnification of display of the selection assistance image 81 as shown in Fig. 13. When the magnification of display of the selection assistance image 81 is made higher than the initial state, only parts of the selection assistance images 81 and 82 and only parts of the stained images 91 and 92 are displayed on the screen 551. In the same manner, when the operator changes the magnification of display of one of the selection assistance image 82 and the stained images 91 and 92, the magnifications of display of the other three images are also changed in conjunction therewith.

This enables the operator to compare the selection assistance images 81 and 82 and the stained images 91 and 92 with the same magnification of display without the need to adjust the magnification of display in each of the selection assistance images 81 and 82 and the stained images 91 and 92.

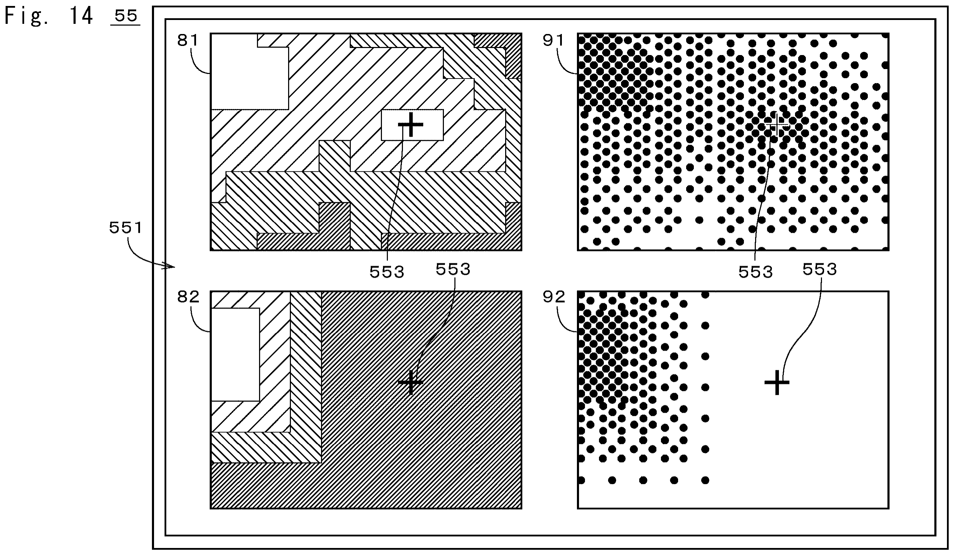

When the selection assistance images 81 and 82 and the stained images 91 and 92 are enlarged from the initial state (see Fig. 12) as shown in Fig. 13, the operator changes the display range of the sample 90 (see Fig. 12) in the selection assistance image 81 by placing the mouse pointer over the selection assistance image 81 and operating the mouse button or the like. Following this, as shown in Fig. 14, the display ranges of the sample 90 in the selection assistance image 82 and the stained images 91 and 92 on the screen 551 are also changed in conjunction therewith and become the same as the display range in the selection assistance image 81. In the same manner, when the operator changes the display range of the sample 90 in one of the selection assistance image 82 and the stained images 91 and 92, the display ranges in the other three images are also changed in conjunction therewith.

This enables the operator to immediately observe a region of interest that has been focused on in one of the selection assistance images 81 and 82 and the stained images 91 and 92 without the need to again search for this region of interest in the other three images.

In the region selection assistance device 1, the position indicator 553 that indicates a position in each image may also be displayed over each of the selection assistance images 81 and 82 and the stained images 91 and 92 as shown in Figs. 12 to 14. For example, the position indicators 553 may be cross marks or rectangular frames that can be displaced using the mouse 56b or the like. It is preferable that the four position indicators 553 displayed over the selection assistance images 81 and 82 and the stained images 91 and 92 respectively may be movable in conjunction with one another along with the movement of the mouse 56b or the like. This enables the operator to readily focus attention on approximately the same positions indicated by the position indicators 553 in the selection assistance images 81 and 82 and the stained images 91 and 92.

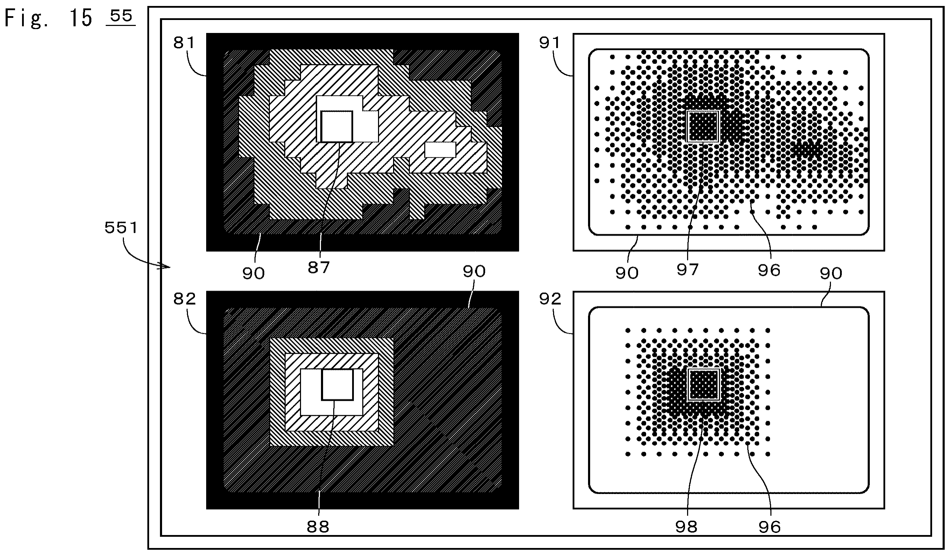

The operator designates an analysis region of the selection assistance image 81 or 82 while variously changing the display modes of the selection assistance images 81 and 82 and the stained images 91 and 92 as necessary. For example, the operator may designate the analysis region by setting the analytical window 87 illustrated in Fig. 15 at a desired position in the selection assistance image 81 via the mouse 56b or the like (step S15). In the region selection assistance device 1, an analytical window 88 is displayed in the selection assistance image 82, and analytical windows 97 and 98 are displayed in the stained images 91 and 92 in conjunction with the setting of the analytical window 87 in the selection assistance image 81.

The size of the analytical window 88 and the position of the analytical window 88 relative to the position of the sample 90 in the selection assistance image 82, the size of the analytical window 97 and the position of the analytical window 97 relative to the position of the sample 90 in the stained image 91, and the size of the analytical window 98 and the position of the analytical window 98 relative to the position of the sample 90 in the stained image 92 are approximately the same as the size of the analytical window 87 and the position of the analytical window 87 relative to the position of the sample 90 in the selection assistance image 81. In the example shown in Fig. 15, the analytical window 87 has a rectangular shape and a varying size. When the size or position of the analytical window 87 is changed, the sizes or positions of the analytical windows 88, 97, and 98 are also changed in conjunction therewith.

After the setting of the analytical windows 87, 88, 97, and 98 (i.e., the designation of the analysis region) ends, the analysis image acquirer 506 (see Fig. 2) cuts out a region of the stained image 91 that is included in the analytical window 97 and/or a region of the stained image 92 that is included in the analytical window 98 and transmits the cut-out region(s) as (an) image(s) for detailed analysis to the storage 501 (step S16). This enables the operator to readily check the distribution of aggregates of the stained cells 96 in the selection assistance images 81 and 82 and select (a) region(s) of the stained image(s) 91 and/or 92 suitable for analysis on the basis of the distribution. For example, the operator can check a region that shows the highest aggregation of stained cells 96 (in the above-described example, the region displayed in "yellow") in each of the selection assistance images 81 and 82 on the screen 551 and select a region suitable for analysis from a region of the stained image 91 or 92 that corresponds to the checked region.

Instead of setting the analytical window 87 by operation on the selection assistance image 81, the operator may set the analytical window 88 in the selection assistance image 82. In this case as well, the analytical windows 87, 97, and 98 that appear in conjunction with the analytical window 88 are displayed in the selection assistance image 81 and the stained images 91 and 92, respectively.

Instead of setting the analytical window 97 by operation on the selection assistance image 81, the operator may also set the analytical window 97 directly in the stained image 91, or may set the analytical window 98 directly in the stained image 92. In these cases, the analytical window 87 or 88 that appears in conjunction with the analytical window 97 or 98 may be displayed in the selection assistance image 81 or 82. As shown in Figs. 13 and 14, the setting of the analytical windows 87, 88, 97, and 98 may also be performed on the screen 551 in which the magnifications of display of the selection assistance images 81 and 82 and the stained images 91 and 92 or the display ranges thereof have been changed from the initial state.

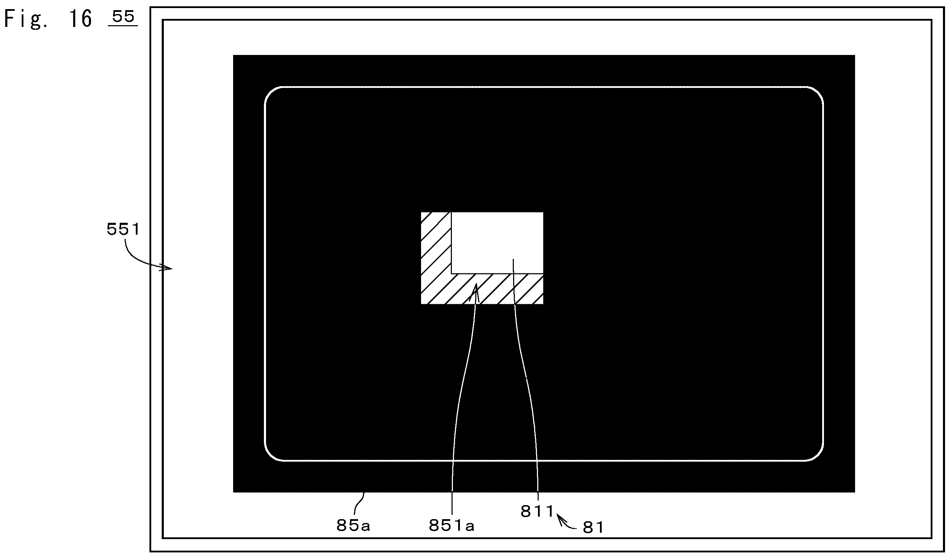

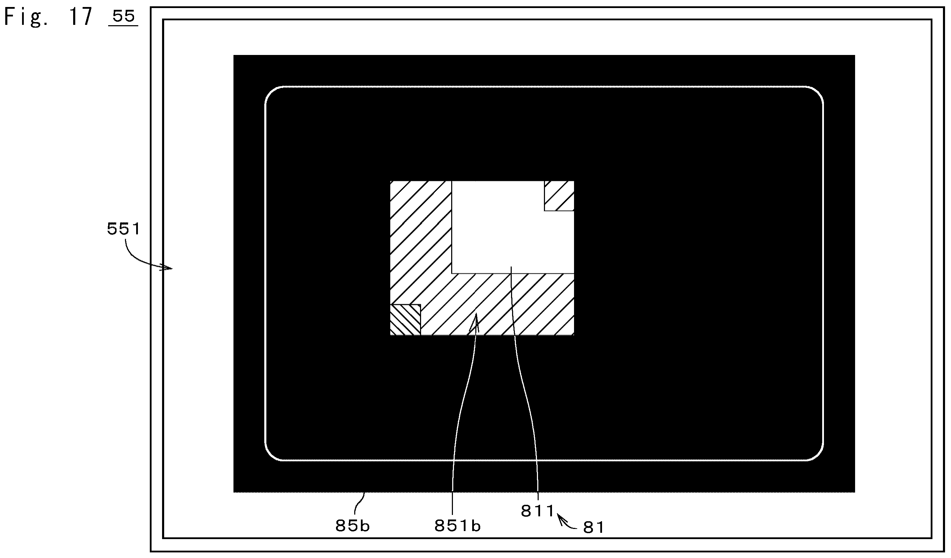

As described above, in the case where the analysis region is designated based on both of the stained images 91 and 92, in step S14, it is not always necessary to display the selection assistance image 81 and the selection assistance image 82 aligned with each other on the screen 551. For example, as shown in Figs. 16 and 17, a mask 85a or 85b that is generated based on the stained image 92 (see Fig. 12) by the mask generator 507 (see Fig. 2) may be displayed over the selection assistance image 81 so that only part of the selection assistance image 81 is visually recognizable on the display. For example, the mask generator 507 may subject the stained image 92 aligned with the stained image 91 to threshold value processing so as to generate a binary image that indicates a positive region and a negative region. Then, the mask 85a or 85b is generated by defining one of the positive region and the negative region as a transparent region and defining the other region as a mask region (i.e., a non-transparent region).

In the case of the mask 85a illustrated in Fig. 16, only a region of the stained image 92 that is included in a range that shows the highest aggregation of stained cells 96 (i.e., a region corresponding to the first region 821 shown in Fig. 12) is determined as the positive region, and this positive region is determined as an opening 851a that is the transparent region. The region other than the opening 851a (i.e., the negative region) is filled in with a background color of "black" and determined as the mask region.

In the example shown in Fig. 16, the mask 85a generated based on the stained image 92 is displayed over the selection assistance image 81 generated based on the stained image 91. Since only a region of the selection assistance image 81 that overlaps with the positive region of the stained image 92 is visually recognizable, the operator designates the analysis region from this visually recognizable region. This limits the position of the analysis region to within the positive region of the stained image 92 and allows the analysis region to be selected in consideration of the aggregation of stained cells 96 in the stained image 91. For example, by designating the analysis region from the first region 811 of the selection assistance image 81 that is located within the opening 851a, it is possible to limit the position of the analysis region to within the positive region of the stained image 92 and select a region of the stained image 91 that shows the highest aggregation of stained cells 96, as the analysis region.

In the example of the mask 85b illustrated in Fig. 17, a region of the stained image 92 that is included in a range that shows the highest aggregation of stained cells 96 and a region of the stained image 92 that is included in a range that shows the second highest aggregation of stained cells 96 (i.e., regions corresponding to the first region 821 and the second region 822 shown in Fig. 12) are determined as the positive region, and these positive regions are determined as an opening 851b that is the transparent region. The region other than the opening 851b (i.e., the negative region) is filled in with a background color of "black" and determined as the mask region.

In the example shown in Fig. 17, the mask 85b generated based on the stained image 92 is displayed over the selection assistance image 81 generated based on the stained image 91. In this case as well, the operator designates the analysis region from a region that is visually recognizable in the selection assistance image 81 (i.e., a region that overlaps with the opening 851b of the mask 85b). This limits the position of the analysis region to within the positive region of the stained image 92 and allows the analysis region to be selected in consideration of the aggregation of stained cells 96 in the stained image 91.

In the examples shown in Figs.16 and 17, although the selection assistance image 81 is masked with the region of the stained image 92 that is determined as the negative region, the selection assistance image 81 may be masked with the region of the stained image 92 that is determined as the positive region as described above. In this case, the operator can limit the position of the analysis region to within the negative region of the stained image 92 and select the analysis region in consideration of the aggregation of stained cells 96 in the stained image 91.

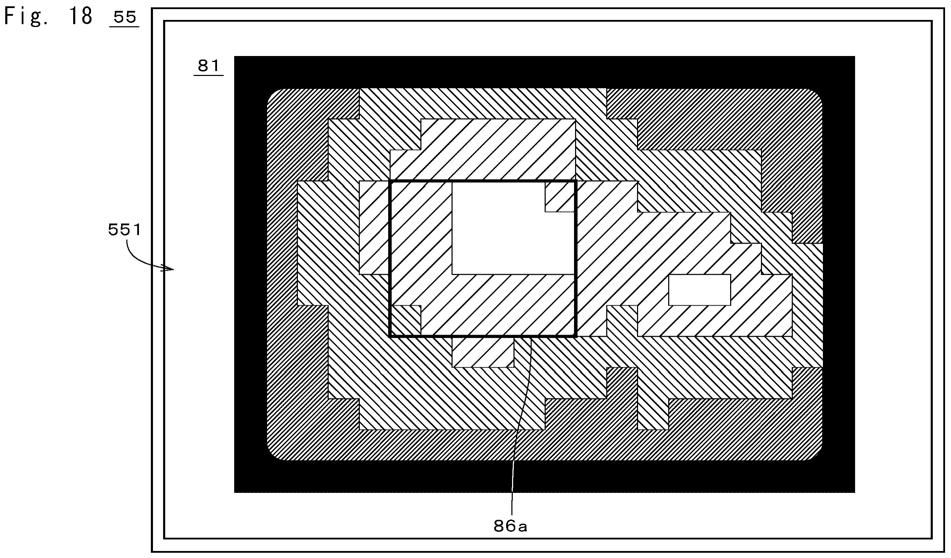

In step S14, instead of the aforementioned mask 85a or 85b, a boundary line 86a that is acquired based on the stained image 92 by the boundary line acquirer 508 (see Fig. 2) may be displayed over the selection assistance image 81 as shown in Fig. 18. For example, the boundary line acquirer 508 may subject the stained image 92 to threshold value processing so as to generate a binary image that indicates a positive region and a negative region and acquire the boundary line 86a between the positive region and the negative region. In the example shown in Fig. 18, only a region of the stained image 92 that is included in a range that shows the highest aggregation of stained cells 96 (i.e., a region corresponding to the first region 821 shown in Fig. 12) is determined as the positive region, and the other region is determined as the negative region. Then, the outer peripheral edge of the positive region is determined as the boundary line 86a.

By designating the analysis region from inside the boundary line 86a, the operator can limit the position of the analysis region to within the positive region of the stained image 92 and select the analysis region in consideration of the aggregation of stained cells 96 in the stained image 91. By designating the analysis region from outside the boundary line 86a, the operator can limit the position of the analysis region to within the negative region of the stained image 92 and select the analysis region in consideration of the aggregation of stained cells 96 in the stained image 91. By designating the analysis region from positions overlapping with the boundary line 86a, the operator can limit the position of the analysis region to any position on the boundary between the positive region and the negative region in the stained image 92 and select the analysis region in consideration of the aggregation of stained cells 96 in the stained image 91.

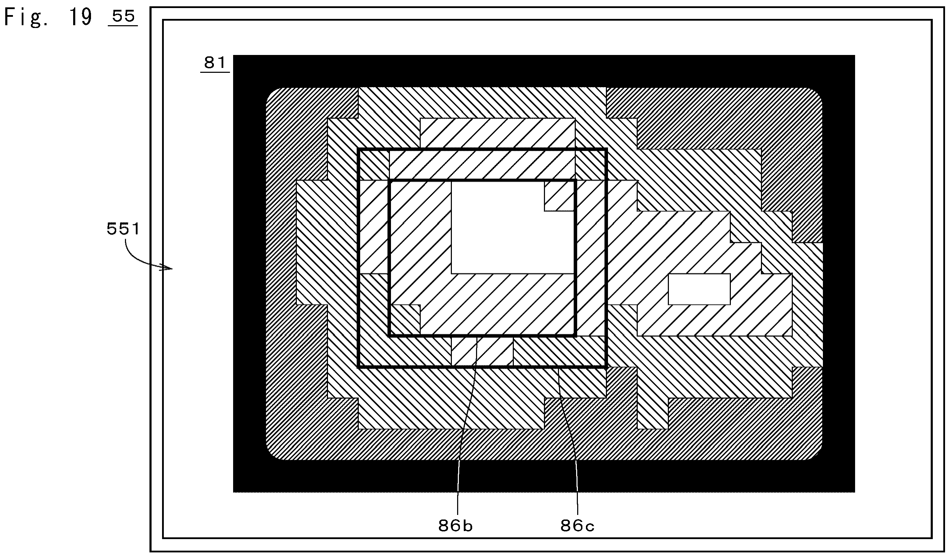

In step S14, boundary lines 86b and 86c that are acquired based on the stained image 92 by the boundary line acquirer 508 (see Fig. 2) may be displayed over the selection assistance image 81 as shown in Fig. 19. For example, the boundary line acquirer 508 may subject the stained image 92 to threshold value processing so as to generate an image that indicates a positive region, a negative region, and a region on the boundary between the positive region and the negative region (this region is hereinafter also referred to as the "boundary region") and acquire the boundary line 86b between the positive region and the boundary region and the boundary line 86c between the boundary region and the negative region.

In the example shown in Fig. 19, a region of the stained image 92 that is included in a range that shows the highest aggregation of stained cells 96 (i.e., a region corresponding to the first region 821 shown in Fig. 12) is determined as the positive region, a region of the stained image 92 that is included in a range that shows the second highest aggregation of stained cells 96 (i.e., a region corresponding to the second region 822 shown in Fig. 12) is determined as the boundary region, and the other region is determined as the negative region. Then, the outer peripheral edge of the positive region is determined as the boundary line 86b, and the inner peripheral edge of the negative region is determined as the boundary line 86c.

By designating the analysis region from inside the boundary line 86b, the operator can limit the position of the analysis region to within the positive region of the stained image 92 and select the analysis region in consideration of the aggregation of stained cells 96 in the stained image 91. By designating the analysis region from a region between the boundary lines 86b and 86c, the operator can limit the position of the analysis region to within the boundary region of the stained image 92 and select the analysis region in consideration of the aggregation of stained cells 96 in the stained image 91. By designating the analysis region from outside the boundary line 86b, the operator can limit the position of the analysis region to within the negative region of the stained image 92 and select the analysis region in consideration of the aggregation of stained cells 96 in the stained image 91.

The allocation of the display color to each segmented region 95 in step S12 does not necessarily have to be performed based on only the aggregation of stained cells 96 in one stained image 91, and may be performed based on the aggregation of stained cells 96 in each of a plurality of types of stained images obtained by staining one sample 90 by a plurality of different types of staining methods.

For example, in the case where the stained images 91 and 92 described above are used for the allocation of the display color, firstly, the stained images 91 and 92 are aligned with each other before step S11. As described above, this alignment may be performed automatically by known image registration technology, or may be performed manually by the operator. In the case where the stained images 91 and 92 show the sample 90 on different scales, image processing is performed so that the sample 90 is shown on the same scale.

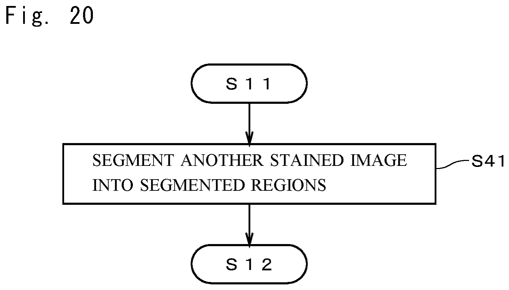

Then, as described above, the stained image 91 is segmented into a plurality of segmented regions 95 shown in Fig. 3 (step S11 in Fig. 5). The stained image 92 is also segmented into a plurality of segmented regions 95 in the same manner as in the segmentation of the stained image 91 (step S41 in Fig. 20). That is, the stained image 92 includes the segmented regions 95 that are set to have the same size and to be arranged in the same manner as the segmented regions 95 that are set in the stained image 91. Note that step S41 may be performed in parallel with step S11, or may be performed before or after step S11.

After steps S11 and S41 end, the display color allocator 503 (see Fig. 2) obtains the aggregation of stained cells 96 in each segmented region 95 of the stained image 91 and each segmented region 95 of the stained image 92. Then, one display color is allocated to each segmented region 95 so as to make each segmented region 95 more conspicuous as the segmented region 95 shows a higher aggregation of stained cells 96 (step S12).

The allocation of the display color in step S12 may be performed based on the aggregation of stained cells 96 in each segmented region 95 of the stained images 91 and 92. For example, the display color may be allocated to each segmented region 95 on the basis of a lower aggregation out of the aggregation of stained cells 96 in the stained image 91 and the aggregation of stained cells 96 in the stained image 92. Alternatively, the display color may be allocated to each segmented region 95 on the basis of a higher aggregation out of the aggregation of stained cells 96 in the stained image 91 and the aggregation of stained cells 96 in the stained image 92. In either case, the selection assistance image can be displayed in consideration of the aggregation of stained cells 96 in each of a plurality of types of stained images in step S14.

As another alternative, in step S12, a composite stained image may be prepared from a maximum combination of a plurality of types of stained images for each pixel (i.e., an image in which each pixel has, as its pixel value, a maximum value of the pixel values of the plurality of types of stained images) and segmented into a plurality of segmented regions 95, and the allocation of the display color may be performed based on the aggregation of stained cells 96 in each segmented region 95 of the composite stained image. In this case, steps S11 and S41 described above may be performed simultaneously by, for example, segmenting the composite stained image into a plurality of segmented regions 95. With this method, a region that shows a high aggregation of stained cells 96 in one of the plurality of types of stained images can be displayed with high conspicuity in the aforementioned selection assistance image displayed in step S14.

As described thus far, the region selection assistance method of assisting selection of an analysis region of a stained image obtained by immunostaining includes the step of segmenting the stained image 91 of the sample 90 obtained by immunostaining into a plurality of segmented regions 95 (step S11), the step of allocating one display color to each of the segmented regions 95 from the display color group of a plurality of colors each having different conspicuity, to make each segmented region 85 more conspicuous as the segmented region 85 shows a higher aggregation of stained cells 96 (step S12), the step of generating the selection assistance image 81 in which each of the segmented regions 95 is filled in with the display color allocated in step S12 (step S13), and the step of displaying the selection assistance image 81 on the screen 551 (step S14). Accordingly, it is possible to readily recognize visually whether the aggregation of stained cells 96 in each position of the stained image 91 is high or low. As a result, the operator can readily select a region of the stained image 91 that is suitable for analysis as the analysis region on the basis of the aggregation of sained cells 96.

As described above, in step S12, it is preferable that the aggregation of stained cells 96 in each segmented region 95 may be obtained based on the staining intensity of the segmented region 95. In this case, since there is no need to identify individual cells within the stained image 91, it is possible to reduce throughput required for the allocation of the display color in step S12 and enable processing using the stained image 91 acquired with a low magnification of display. As a result, the amount of time required for step S12 is reduced.

As described above, it is preferable that the calculation of the aggregation of stained cells 96 in each segmented region 95 may include the step of obtaining the staining intensity of each of a plurality of subregions that configure the segmented region 95 (step S31) and the step of downscaling an image by using a maximum value of the staining intensities of the subregions as a representative value for the staining intensity of the segmented region 95 (step S32). Accordingly, even in the case where the segmented region 95 includes only a small number of stained cells 96, it is possible to improve the conspicuity of the segmented region 95 in the selection assistance image 81.

As described above, in step S12, it is also preferable that the aggregation of stained cells 96 in each segmented region 95 may be obtained based on the number of positive cells included in the segmented region 95. This accurately improves the conspicuity of a region that includes a large number of positive cells.

As described above, in step S14, it is preferable that the stained image 91 or another selection assistance image 82 may be displayed aligned with the selection assistance image 81 on the screen 551, the other selection assistance image being generated from another stained image 92 of the sample 90 obtained by immunostaining by using a method similar to the method used to generate the selection assistance image 81. In the case where the selection assistance image 81 and the stained image 91 are displayed aligned with each other, in general, the tissue structure of the sample 90 is easier to recognize in the stained image 91. Thus, the operator can select the analysis region while viewing, for example, the actual mode of dispersion of the stained cells 96 in the stained image 91. Besides, by viewing the selection assistance image 81 and the other selection assistance image, the operator can accurately determine artifacts (e.g., non-specific strong staining due to tissue twisting or the like) that may be difficult to find from the selection assistance image 81 alone. In the case where the selection assistance image 81 and the other selection assistance image 82 are displayed aligned with each other, the operator can readily select the analysis region in consideration the aggregation of stained cells 96 in both of the stained image 91 and the other stained image 92 by comparing the selection assistance image 81 and the other selection assistance image 82.

As described above, it is preferable that the magnification of display of the selection assistance image 81 and the magnification of display of either the stained image 91 or the other selection assistance image 82 may be changeable in conjunction with each other. This enables the operator to readily compare a plurality of images with the same magnification of display without the need to adjust the magnifications of display in the selection assistance image 81 and either the stained image 91 or the other selection assistance image 82.

As described above, it is preferable that the display range of the sample 90 in the selection assistance image 81 and the display range of the sample 90 in either the stained image 91 or the other selection assistance image 82 may be changeable in conjunction with each other. This enables the operator to immediately observe a region of interest that has been focused on in one of the selection assistance image 81 and either the stained image 91 or the other selection assistance image 82 without the need to again search for this region of interest in the other image.

As described above, it is preferable that the position indicator 553 displayed over the selection assistance image 81 and indicating a position in the selection assistance image 81 and the position indicator 553 displayed over either the stained image 91 or the other selection assistance image 82 and indicating a position in either the stained image 91 or the other selection assistance image 82 may be movable in conjunction with each other. This enables the operator to readily focus on approximately the same positions indicated by the position indicators 553 in the selection assistance image 81 and either the stained image 91 or the other selection assistance image 82.

As described above, in step S14, it is preferable that the scale of the sample 90 in the selection assistance image 81 and the scale of the sample 90 in either the stained image 91 or the other selection assistance image 82 may be the same. This enables the operator to readily compare the selection assistance image 81 and either the stained image 91 or the other selection assistance image 82.

It is preferable that the region selection assistance method described above may further include the step of, before step S12, segmenting the other stained image 92 of the sample 90 obtained by immunostaining into a plurality of segmented regions 95 in the same manner as in the segmentation in step S11 (step S41). It is also preferable that the allocation of the display color in step S12 may be performed based on the aggregation of stained cells 96 in each segmented region 95 of both the stained image 91 and the other stained image 92. This enables the operator to readily select the analysis region in consideration of the aggregation of stained cells 96 in both of the stained images 91 and 92.

As described above, it is preferable that the other stained image 92 of the sample 90 obtained by immunostaining may be subjected to threshold value processing to generate a binary image that indicates a positive region and a negative region, and the selection assistance image 81 may be masked with the positive or negative region in step S14. This enables the operator to limit the position of the analysis region to within one of the positive and negative regions of the stained image 92 and select the analysis region in consideration of the aggregation of stained cells 96 in the stained image 91.

As described above, it is preferable that the other stained image 92 of the sample 90 obtained by immunostaining may be subjected to threshold value processing to acquire the boundary lines 86a, 86b, and 86c of the positive region or the negative region, and these boundary lines 86a, 86b, and 86c may be displayed over the selection assistance image 81 in step S14. This enables the operator to take into consideration the positive and negative regions of the stained image 92 or the like before selecting the analysis region in consideration of the aggregation of stained cells 96 in the stained image 91.

The region selection assistance device 1 described above includes the image segmentor 502, the display color allocator 503, the selection-assistance-image generator 504, and the screen 551. The image segmentor 502 segments the stained image 91 of the sample 90 obtained by immunostaining into a plurality of segmented regions 95. The display color allocator 503 allocates one display color to each of the segmented regions 95 from the display color group of a plurality of colors each having different conspicuity, so as to make each segmented region 95 more conspicuous as the segmented region 95 shows a higher aggregation of stained cells 96. The selection-assistance-image generator 504 generates the selection assistance image 81 in which each of the segmented regions 95 is filled in with the display color allocated by the display color allocator 503. The screen 551 displays the selection assistance image 81. This enables the operator to readily select a region of the stained image 91 that is suitable for analysis as the analysis region on the basis of the aggregation of stained cells 96 in the same manner as described above.

The program 572 described above is executed by a computer to perform the step of segmenting the stained image 91 of the sample 90 obtained by immunostaining into a plurality of segmented regions 95 (step S11), the step of allocating one display color to each of the segmented regions 95 from the display color group of a plurality of colors each having different conspicuity, so as to make each segmented region 95 more conspicuous as the segmented region 85 shows a higher aggregation of stained cells 96 (Step S12), the step of generating the selection assistance image 81 in which each of the segmented regions 95 is filled in with the display color allocated in step S12, and the step of displaying the selection assistance image 81 on the screen 551 (step S14). This enables the operator to readily select a region of the stained image 91 that is suitable for analysis as the analysis region on the basis of the aggregation of stained cells 96.

The region selection assistance method, the region selection assistance device 1, and the program 572 described above may be modified in various ways.

For example, the number of images displayed on the screen 551 of the display 55 is not limited to the number described in the above examples, and may be changed to any number. The arrangement of images on the screen 551 may also be modified in various ways.

In the region selection assistance device 1, in the case where a plurality of displays 55 are arranged in the longitudinal and/or lateral directions and used as one display device, the screen 551 described above is a collection of the screens of these displays 55.

The boundary lines 86a, 86b, and 86c described above may be displayed together with the mask 85a or 85b over the selection assistance image 81.

In the selection assistance images 81 and 82, contour lines that correspond to the aggregation of stained cells 96 in each segmented region 95 may be displayed with the aforementioned allocated display color that makes each segmented region 85 more conspicuous as the segmented region 85 shows a higher aggregation of stained cells 96. In this case, the outer peripheral edges of a group of segmented regions 95 arranged adjacent to one another and having the same color allocated thereto as the display color are displayed with this display color. The outer peripheral edge of one segmented region 95 that has allocated thereto a display color that is different from the display colors allocated to all adjacent segmented regions 95 is displayed with the display color allocated to the one segmented region 95. In the case where the contour lines described above are displayed over the selection assistance images 81 and 82, the filling-in of each segmented region 95 may be omitted. Even in this case, it is possible to readily recognize visually high and low of the aggregation of stained cells 96 at each position of the stained images 91 and 92 in approximately the same manner as described above.

As described above, in the case where a plurality of images (e.g., the selection assistance images 81 and 82 and the stained images 91 and 92) are displayed on the screen 551, the magnifications of display of these images may be changed individually without conjunction. The display ranges of the sample 90 in these images may also be individually changed without conjunction. Moreover, the position indicators 553 displayed over these images may be moved individually without conjunction. Note that the display of the position indicators 553 may be omitted.

Each stained image stored in the storage 501 of the region selection assistance device 1 may be a multicolor image of one sample 90 that uses a plurality of types of antibodies collectively. In this case, for example, it is possible, by subjecting the multicolor image to color separation, to acquire a monochromatic stained image that corresponds to a specific one antibody, and this monochromatic stained image is determined as the stained image 91 described above. Alternatively, the multicolor image described above may be determined as the stained image 91, and stained cells 96 that correspond to a specific one antibody may be detected from the multicolor image to calculate the aggradation of stained cells 96 and generate the selection assistance image 81 in accordance with this aggregation.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

1 region selection assistance device
81, 82 selection assistance image
86a, 86b, 86c boundary line
90 sample
91, 92 stained image
95 segmented region
96 stained cell
502 image segmentor
503 display color allocator
504 selection-assistance-image generator
551 screen
553 position indicator
572 program
S11 to S16, S21 to S25, S31 to S33, S41 step

## Claims

1. A region selection assistance method of assisting selection of an analysis region of a stained image obtained by immunostaining, the region selection assistance method comprising:
a) segmenting a stained image of a sample obtained by immunostaining into a plurality of segmented regions;
b) allocating one display color to each of said plurality of segmented regions from a display color group of a plurality of colors each having different conspicuity, to make each segmented region more conspicuous as said each segmented region shows a higher aggregation of stained cells;
c) generating a selection assistance image in which each of said plurality of segmented regions is filled in with the display color allocated in said operation b); and
d) displaying said selection assistance image on a screen.

2. The region selection assistance method according to claim 1, wherein
in said operation b), the aggregation of stained cells in said each segmented region is calculated based on a staining intensity of said each segmented region.

3. The region selection assistance method according to claim 2, wherein
the calculation of the aggregation of stained cells in said each segmented region includes:
e) obtaining a staining intensity of each of a plurality of subregions that are arranged in a matrix configuring said each segmented region; and
f) downscaling an image by using a maximum value of the staining intensities of said plurality of subregions as a representative value for the staining intensity of said each segmented region.

4. The region selection assistance method according to claim 1, wherein
in said operation b), the aggregation of stained cells in said each segmented region is calculated based on the number of positive cells included in said each segmented region.

5. The region selection assistance method according to any one of claims 1 to 4, wherein
in said operation d), said stained image or another selection assistance image is displayed aligned with said selection assistance image on said screen, said another selection assistance image being generated from another stained image of said sample obtained by immunostaining, by using a method similar to a method used to generate said selection assistance image.

6. The region selection assistance method according to claim 5, wherein
a magnification of display of said selection assistance image and a magnification of display of either said stained image or said another selection assistance image are changeable in conjunction with each other.

7. The region selection assistance method according to claim 5, wherein
a display range of said sample in said selection assistance image and a display range of said sample in either said stained image or said another selection assistance image are changeable in conjunction with each other.

8. The region selection assistance method according to claim 5, wherein
a position indicator that is displayed over said selection assistance image and indicates a position in said selection assistance image and a position indicator that is displayed over either said stained image or said another selection assistance image and indicates a position in either said stained image or said another selection assistance image are movable in conjunction with each other.

9. The region selection assistance method according to claim 5, wherein
in said operation d), a scale of said sample in said selection assistance image is the same as a scale of said sample in either said stained image or said another selection assistance image.

10. The region selection assistance method according to any one of claims 1 to 4, further comprising:
g) before said operation b), segmenting another stained image of said sample obtained by immunostaining into a plurality of segmented regions in a manner similar to a manner of segmentation in said operation a),
wherein the allocation of the display color in said operation b) is performed based on the aggregation of stained cells in said each segmented region of both said stained image and said another stained image.

11. The region selection assistance method according to any one of claims 1 to 4, wherein
a binary image that indicates a positive region and a negative region is generated by subjecting another stained image of said sample obtained by immunostaining to threshold value processing, and
in said operation d), said selection assistance image is masked with said positive region or said negative region.

12. The region selection assistance method according to any one of claims 1 to 4, wherein
a boundary line of a positive region or a negative region is acquired by subjecting another stained image of said sample obtained by immunostaining to threshold value processing, and
in said operation d), said boundary line is displayed over said selection assistance image.

13. A region selection assistance device that assists selection of an analysis region of a stained image obtained by immunostaining, the region selection assistance device comprising:
an image segmentor that segments a stained image of a sample obtained by immunostaining into a plurality of segmented regions;
a display color allocator that allocates one display color to each of said plurality of segmented regions from a display color group of a plurality of colors each having different conspicuity, to make each segmented region more conspicuous as said each segmented region shows a higher aggregation of stained cells;
a selection-assistance-image generator that generates a selection assistance image in which each of said plurality of segmented regions is filled in with the display color allocated by said display color allocator; and
a screen that displays said selection assistance image.

14. A program for assisting selection of an analysis region of a stained image obtained by immunostaining,
said program being executed by a computer to:
a) segment a stained image of a sample obtained by immunostaining into a plurality of segmented regions;
b) allocate one display color to each of said plurality of segmented regions from a display color group of a plurality of colors each having different conspicuity, to make each segmented region more conspicuous as said each segmented region shows a higher aggregation of stained cells;
c) generate a selection assistance image in which each of said plurality of segmented regions is filled in with the display color allocated in said operation b); and
d) display said selection assistance image on a screen.
